# EUROPEAN PATENT SPECIFICATION

(11) **EP 0 322 844 B1**
(45) Date of publication and mention of the grant of the patent: **06.10.1993**
(21) Application number: 88121687.3
(22) Date of filing: 27.12.1988
(51) Int. Cl.: B65B 7/28

(54) **Can lid feeder**
Zuführvorrichtung für Büchsendeckel
Dispositif d'alimentation de couvercles pour boîtes

(30) Priority: 29.12.1987 JP 334108/87; 25.03.1988 JP 39326/88 U; 28.03.1988 JP 73658/88
(43) Date of publication of application: 05.07.1989
(60) Divisional application: 91120078.0
(73) Proprietor: MITSUBISHI JUKOGYO KABUSHIKI KAISHA, Tokyo 100 (JP)
(72) Inventor: Mihara, Hirokata, Tokyo, (JP); Takagi, Koichi, c/o Nagoya Machinery Works, Iwatsuka-cho,Nakamura,Nagoya,Aichi-ken, (JP); Shimizu, Teruo, c/o Nagoya Machinery Works, Iwatsuka-cho,Nakamura, Nagoya,Aichi-ken, (JP); Tashiro, Katsunori, c/o Can Development Center, Sunto-gun, Shizuoka-ken, (JP); Takahashi, Hideo,c/o Can Development Center, Sunto-gun, Shizuoka-ken, (JP)
(74) Representative: Henkel, Feiler, Hänzel & Partner

(56) References cited:
- DE-A- 2 021 091
- US-A- 2 840 963

## Description

### BACKGROUND OF THE INVENTION:

### Field of the Invention:

The present invention relates to a can lid feeder that is applicable to a can seamer for packaging cans making use of aluminium cans, iron cans or the like and packed with beer, coffee, juice, etc.

### Description of the Prior Art:

A separator/feeder for can lids has been heretofore proposed, for instance, in Laid-Open Japanese Patent Specification No. 56-139242 (1981). Explaining now this separator/feeder with reference to Fig. 11, a separator 1 is rotationally driven by a rotary shaft 8 that is in turn driven via a gear train 6 from a drive shaft 5 of a can drum turlet 4. Can lids 7 would drop through a drop hole at the bottom of a hopper and are stacked in an inclined state with one edge of the stack placed on the top of a screw groove 9 of the separator 1, and as the separator 1 rotates, one can lid at the bottom of the stack is lowered as guided by the screw groove 9 of the separator 1 to be fed to the next step of a process.

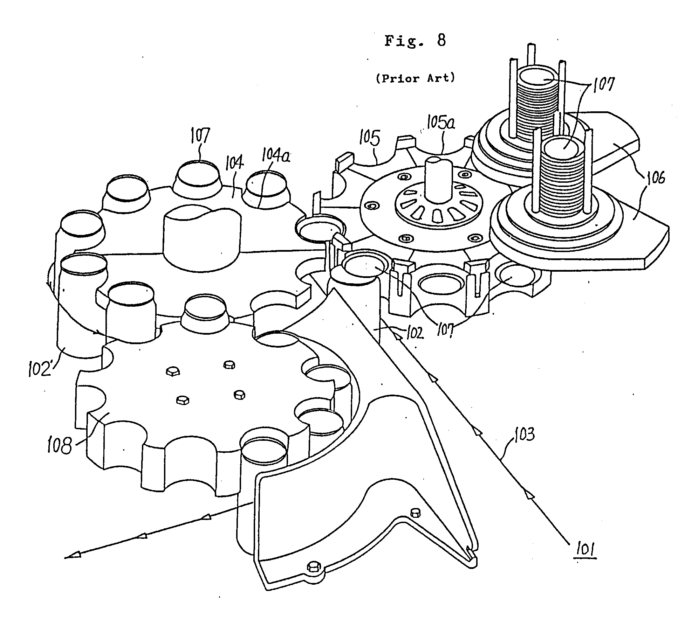

In addition, various kinds of can lid feeders for use in a can seamer have been heretofore proposed, and explaining one example of the proposed can lid feeders with reference to Fig. 8, cans 102 filled with liquid in a filler 101 are fed into a seaming turlet 104 as conveyed by a can feed conveyor 103. Reference numeral 105 designates a can lid feeding turlet disposed contiguously to the seaming turlet 104, on the outer circumference thereof are formed guide grooves 105a similar to the guide grooves 104a for the cans 102 provided on the outer circumference of the seaming turlet 104, can lids 107 are made to fall onto the guide grooves 105a from a can lid feeding mechanism 106 at the above, and the lid 107 which has been made to fall, is fed onto the can 102 which has been conveyed by the can feed conveyor 103 and is about to be fed to the seaming turlet 104. Thereafter, the can 102 and the lid 107 sent into the seaming turlet 104 is subjected to seaming work by means of seaming rolls disposed around the seaming turlet 104 but not shown, and the thus completed packaging can 102' is sent through an outlet turlet 108 to the next step of a process.

In the heretofore known can lid separator/feeder shown in Fig. 7, the separator 1 was fixed in position so as to be rotated about the axis of the rotary shaft 8. Accordingly, if the diameter of the can lid 7 was changed, it was necessary to always match the outer diameter of the separator 1 with the outer circumference of the can lid 7 according to its diameter, and hence the separator had to be replaced by another separator matched with the new can lid. However, since the above-mentioned separator 1 could not be moved in the radial direction, a whole set of a drive mechanism, that is, a gear train 6, a rotary shaft 8 and the like mounted with a separator matched with the changed can lid diameter had to be replaced entirely, and therefore, there were shortcomings that not only the aforementioned set had to be prepared excessively but also the replacement necessitated a long time.

DE-A-20 21 091 discloses a device serving to adjust the position of a separator in a radial direction with respect to a can lid, such device comprising pivotable arms. In order to adjust such separator in this known device, a jig has to be used in order to correctly position these pivotable arms. Accordingly, the adjustment is a cumbersome action which takes a lot of time to be completed.

US-A-2 840 963 discloses a lid placing device comprising a hopper in which a plurality of lids may be stacked one upon the other. The hopper of this known device is defined by vertically projecting guide rods. These vertically projecting guide rods are secured to movable housings and are adapted to be swung together with said movable housings. Due to this feature, in case this known device has to be prepared to deal with a can lid of a different diameter, these vertically projecting guide rods have to be adjusted together with these movable housings by means of a jig. Accordingly, the positioning of the movable housings together with the vertically projecting guide rods is complicated.

### SUMMARY OF THE INVENTION:

It is therefore an object of the present invention to provide an improved can lid feeder in a can seamer having a separator for separating and feeding can lids one by one from the bottom of a stack of can lids, in which adjustment with respect to a can lid of a different diameter can be effected in an easy manner.

According to the present invention, there is provided a can lid feeder comprising the features of claim 1.

According to the present invention, in the case where the cylindrical body at the bottom of the hopper is to be replaced for the purpose of changing the can lid diameter in accordance with change of a can drum diameter, the clamp lever is released, then the swinging gear box is made to swing about the center axis of the gear shaft as guided along the elongated hole in the direction of the separator leaving from the cylindrical body, subsequently after the cylindrical body has been replaced, a side surface of the swinging gear box is brought into contact with the outer circumferential surface of the cylindrical body, under this condition the swinging gear box is fixed in position by means of the clamp lever, thereby the separator is brought into the state where it projects into the drop hole of the cylindrical body by a proper dimension, and the feeding operation of the can lids having the changed size continuously becomes possible.

Owing to the above-mentioned construction and operation of the can lid feeder according to the present invention, in the case where the cylindrical body is to be replaced in accordance with change of a can lid diameter, the cylindrical body can be easily replaced by releasing the clamp lever and causing the swinging gear box to swing, and after replacement of the cylindrical body, under the condition where the side surface of the swinging gear box has been brought into contact with the outer circumferential surface of the cylindrical body, the same gear box can be fixed in position by means of the clamp lever. Thus, since the dimension of projection of the separator into the can lid drop hole can be held always constant by merely bringing the side surface of the swinging gear box into contact with the outer circumferential surface of the cylindrical body, as compared to the case of replacing the whole drive gear mechanism including the separator as one set as is the case with the prior art apparatus, position-setting of the separator is extremely accurate and simple, and moreover, the replacement work can be finished within a very short time. Thus, the advantage of the invention is very remarkable.

The above-mentioned and other objects, features and advantages of the present invention will become more apparent by reference to the following description of a preferred embodiment of the invention taken in conjunction with the accompanying drawings.

### BRIEF DESCRIPTION OF THE DRAWINGS:

In the accompanying drawings:
Fig. 1 is a perspective view of a can lid feeder according to a preferred embodiment of the present invention;
Fig. 2 is a plan view of a can drum guide wheel in the same apparatus;
Fig. 3 is an enlarged plan view of the same;
Fig. 4 is a cross-section view taken along line A-A in Fig. 2;
Fig. 5 is a cross-section view taken along line B-B in Fig. 4;
Fig. 6 is a cross-section view taken along line C-C in Fig. 4;
Fig. 7 is a longitudinal cross-section view of one example of the can lid feeder in the prior art; and
Fig. 8 is a perspective view showing an installed condition of a can lid feeder in the can seamer in the prior art.

### DESCRIPTION OF THE PREFERRED EMBODIMENTS:

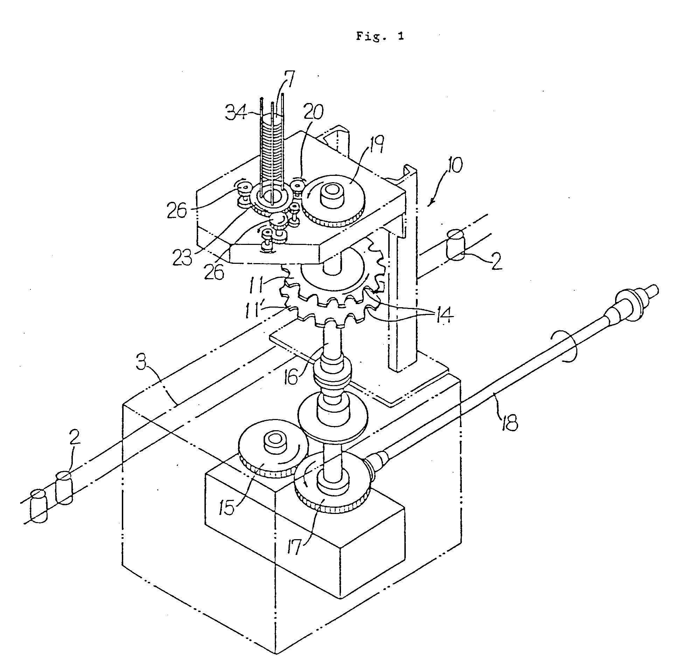

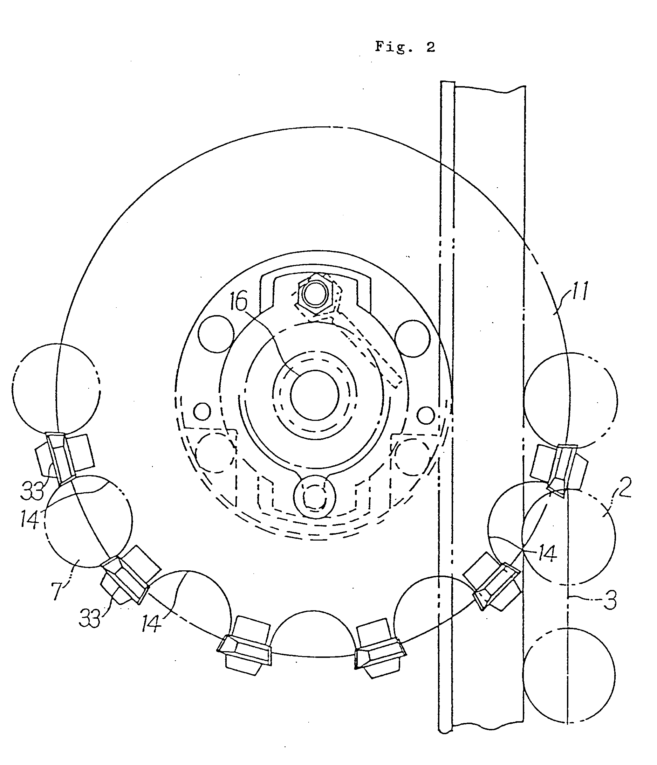

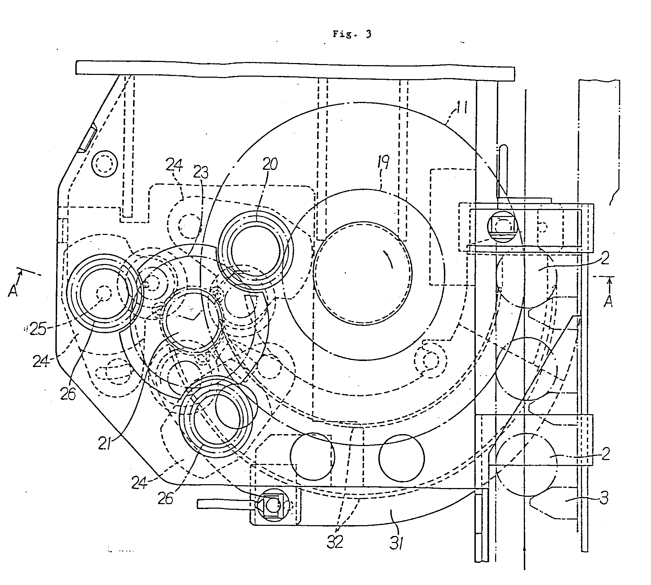

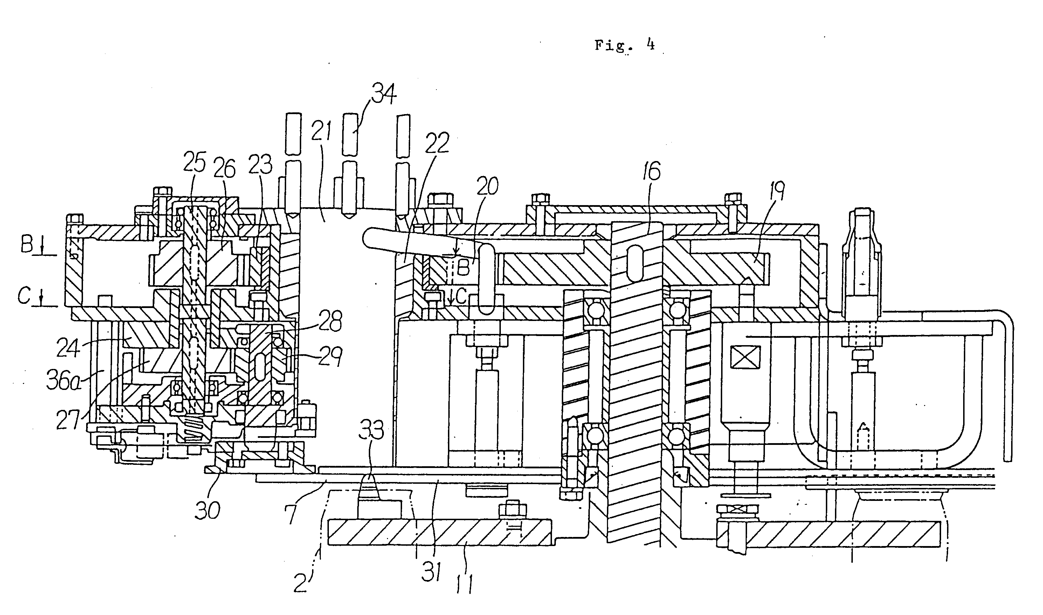

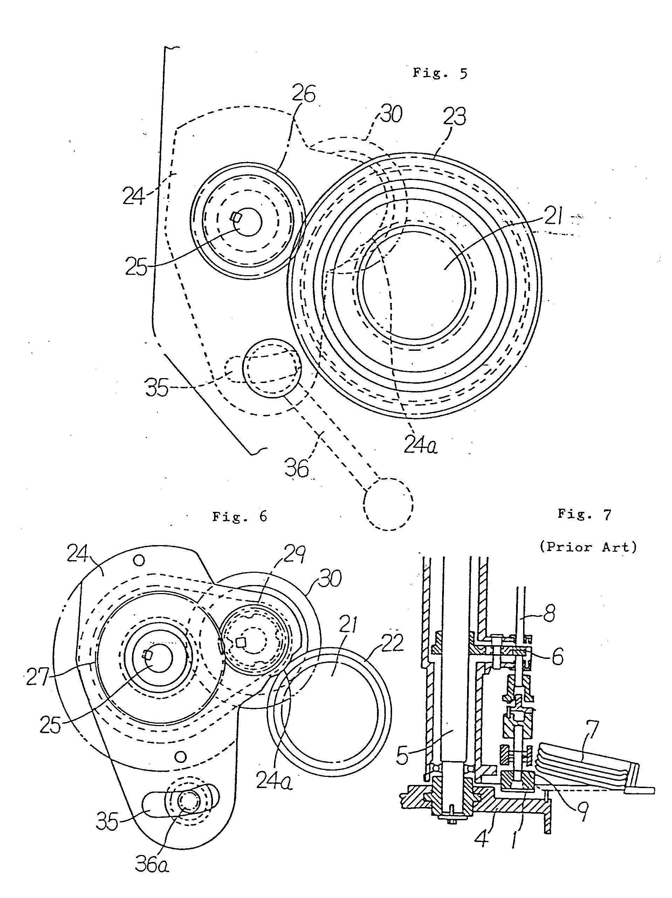

Now the present invention will be explained in connection to the illustrated embodiments. Figs. 1 to 6 show a preferred embodiment of the present invention. At first, explaining with respect to a can lid feeder 10 with reference to Figs. 1 to 6, Fig. 1 is a perspective view showing only a general mechanism of the can lid feeder 10, in which a can drum guide wheel assembly is composed of a pair of upper and lower guide star wheels 11 and 11', and as shown in Fig. 2 these guide star wheels 11 and 11' have guide grooves 14, with which cans 2 conveyed along a can feed conveyor would be engaged at a contact point between the respective loci of their conveying centers. Reference numeral 15 designates a drive gear, which is meshed with a gear 17 for driving a shaft 16 to which the can drum guide star wheels 11 and 11' are fixedly secured. Reference numeral 18 designates a rotary shaft which rotates in the direction of an arrow, and this is provided for the purpose of synchronizing the can lid feeder 10 with rotation of a seamer not shown. Reference numeral 19 designates a gear fixed to the top of the shaft 16, and this gear 19 is adapted to drive a gear 23 surrounding a cylindrical body 22 having a drop hole 21 of can lids 7 therein so as to rotate about its own axis via an intermediate gear 20. The gear 23 is meshed with a gear 26 fixed to a shaft 25 which serves as a center of rotation of a swinging gear box 24, in addition on the same shaft 25 is fixed a gear 27, which is in turn meshed with a gear 29 fixed on a shaft 28 that is rotatably supported from the swinging gear box 24, and at the bottom of the same shaft 28 is fixedly secured a can lid separator 30. The can lid separator 30 serves to separate one can lid 7 at the bottom of a stack of can lids 7 which dropped through the drop hole 21 and stacked, and to feed it to grooves 32, 32 of a rail 31. Reference numeral 33 designates pushers mounted on the can drum guide star wheel 11 between the guide grooves 14 and 14, which hold the can lids 7 fed between the grooves 32, 32 of the rail 31 right above the guide grooves 14 and convey them along the grooves 32, 32 of the same rail in accordance with rotation of the can drum guide star wheel 11. Since the location where the can lid 7 reaches the above of the can 2 conveyed along the can feed conveyor 3 and having been engaged with the can drum guide star wheels 11 and 11' is the terminal ends of the grooves 32, 32, the can lid 7 is disengaged there from the grooves 32, 32 and drops on the can 2 positioned just thereunder, hence the can 2 is sent to the seamer with the can lid 7 kept placed on the can opening portion, and seaming work is effected.

The can lid separator 30 projects from a notched portion at the bottom of the cylindrical body 22 into the drop hole 21 for the can lids, the outer circumferential portion of the can lid at the lowest level is held at the top of a screw groove of the same separator 30, and as the separator 30 is rotated, the can lid is guided to the lower portion of the screw groove. However, in the case where the can lid diameter is changed in accordance with change of the can drum diameter, the separator 30 must be moved in the radial direction in view of the necessity for adapting it to the outer circumferential edge of the can lid. In addition, in the event that the can lid diameter has been changed, it is necessary to replace a cylindrical body 22 having a drop hole diameter matched with the can lid diameter, but provision is made such that regardless of whether the diameter of the replaced cylindrical body has been enlarged or reduced, the outer circumferential edge of the separator 30 can be projected into the drop hole 21 by a predetermined dimension by merely bringing the side surface of the swinging gear box into contact with the outer circumferential surface of the cylindrical body 22. Explaining now the swinging action of the swinging gear box 24, this gear box 24 would swing about the shaft 25. The swinging gear box 24 is provided with an elongated hole 35 that is arcuate about the axis of the shaft 25, and a positioning/clamping screw rod 36a associated with a clamp lever 36 is fitted in the elongated hole 35 to position the swinging gear box 24. If the positioning/clamping screw rod 36a is released by turning the clamp lever 36, the swinging gear box 24 can be manually made to swing arbitrarily as guided by the elongated hole 35 engaged with the screw rod 36a, and thereafter if the screw rod 36a is fastened by turning the clamp lever 36 in the opposite direction, the swinging gear box 24 can be fixed in position there.

Now the operation of the apparatus will be described. Cans 2 filled with liquid by a filler 1 are conveyed towards the can lid feeder 10 by the can feed conveyor 3.

On the other hand, the can drum guide star wheels 11 and 11' and the gear 19 are rotated via the gear 17 and the shaft 16 as driven by the drive gear 15 shown in Fig. 1. When the gear 19 rotates, the gears 20, 23 and 26 are rotated, furthermore the gears 27 and 29 are rotated via the shaft 25, thereby the shaft 28 is rotated, and it rotates the can lid separator 30.

Can lids 7 are fed from a hopper 34, then drop through the drop hole 21 of the cylindrical body 22 and are stacked. Then the can lid 7 at the lowermost level is taken out as a result of rotation of the can lid separator 30 and is fed into the grooves 32, 32 of the rail 31. The can lid 7 entered in the grooves 32, 32 is pushed by the pusher 33 mounted on the can drum guide star wheel 11 under the rail 31, hence it is conveyed as held at the position just above the guide groove 14 of the guide star wheel 11, and at the position where the grooves 32, 32 have terminated, it drops towards the can opening portion from the right above of the can 2 placed at the position where the can 2 has been engaged with the guide groove 14 of the can drum guide wheel 11 after having been conveyed by the can feed conveyor 3 as described above, and is placed on the can opening portion.

Subsequently, if the can drum diameter is changed, then the can lid diameter also must be changed, and so, it is necessary to replace a new cylindrical body 22 having a size matched with the changed can lid diameter. Prior to the replacement of the cylindrical body 22, the screw rod 36a is released by turning the clamp lever 36, and then the swinging gear box 24 is manually made to swing about the axis of the shaft 25 as guided by the elongated hole 35 up to the position where the separator 30 is disengaged from the cylindrical body 22. Next, after the cylindrical body 22 has been replaced by that having a predetermined diameter, the swinging gear box 24 is manually made to swing about the axis of the shaft 25 with the screw rod 36a of the clamp lever 36 guided along the elongated hole 35 up to the position where a side surface 24a of the swinging gear box 24 comes into contact with the outer circumferential surface of the cylindrical body, and thereafter, when the clamp lever 36 is turned in the opposite direction up to the original position, then the positioning/clamping screw rod 36a is fastened. Thus the swinging gear box 24 can be fixed in position there by means of the clamp lever 36.

Since the can lid feeder according to the present invention is constructed as described in detail above, in the case where the cylindrical body is to be replaced in accordance with change of a can lid diameter, the cylindrical body can be easily replaced by releasing the clamp lever and causing the swinging gear box to swing, and after replacement of the cylindrical body, under the condition where the side surface of the swinging gear box has been brought into contact with the circumferential surface of the cylindrical body, the same gear box can be fixed in position by means of the clamp lever. Thus, since the dimension of projection of the separator into the can lid drop hole can be held always constant by merely bringing the side surface of the swinging gear box into contact with the circumferential surface of the cylindrical body, as compared to the case of replacing the whole gear drive mechanism including the separator as one set as is the case with the prior art apparatus, position-setting of the separator is extremely accurate and simple, and moreover, the replacement work can be finished within a very short time. Thus, the advantage of the present invention is very remarkable.

## Claims

1. A can lid feeder (10) comprising a separator (30) which projects from the outside towards a drop hole (21) at the bottom of a hopper (34) to separate stacked can lids (7) one by one from the bottom of the stack, and a rotary shaft (28) which is supported from a swinging gear box (24), said swinging gear box (24) being swingable so that said separator (30) is displaceable in the radial direction with respect to said drop hole (21), said swinging gear box (24) being adjustably mounted in an arcuate slit (35) to bring said swinging gear box (24) into contact with the outer circumferential surface of said can lids in said drop hole and to fix its position in said arcuate slit, characterized in that
a cylindrical body (22) comprising said drop hole (21) is provided at the bottom of said hopper (34), said cylindrical body being replaceably mounted to match the drop hole diameter with a corresponding lid diameter.

2. A can lid feeder as claimed in claim 1, characterized in that said swinging gear box (24) is fixed in position by means of a clamp lever (36).

## Patentansprüche

1. Dosendeckel-Zuführvorrichtung (10), umfassend einen Separator oder Trenner (30), der von der Außenseite in Richtung auf eine Abwerföffnung (21) an der Unterseite eines Füllschachts (34) vorsteht, um gestapelte Dosendeckel (7) jeweils einzeln von der Unterseite des Stapels abzutrennen, und eine drehbare Welle (28), die von einem schwenkbaren Getriebekasten (24) getragen wird bzw. an diesem gelagert ist, wobei der schwenkbare Getriebekasten (24) so schwenkbar ist, daß der Trenner (30) in der Radialrichtung gegenüber der Abwerföffnung (21) verschiebbar ist, wobei der schwenkbare Getriebekasten (24) verstellbar in einem bogenförmig gekrümmten Schlitz (Langloch) (35) montiert ist, um den schwenkbaren Getriebekasten (24) in Berührung mit der Außenumfangsfläche der Dosendeckel in der Abwerföffnung zu bringen und seine Stellung im bogenförmig gekrümmten Schlitz festzulegen,
dadurch gekennzeichnet, daß ein die Abwerföffnung (21) aufweisender Zylinderkörper (22) an der Unterseite des Füllschachts (34) vorgesehen ist, welcher Zylinderkörper zur Anpassung des Abwerföffnungsdurchmessers an einen entsprechenden Deckeldurchmesser auswechselbar montiert oder eingebaut ist.

2. Dosendeckel-Zuführvorrichtung nach Anspruch 1, dadurch gekennzeichnet, daß der schwenkbare Getriebekasten (24) mittels eines Spannhebels (36) in seiner Stellung festlegbar ist.

## Revendications

1. Alimentateur (10) de couvercles pour boîtes de conserve comprenant un séparateur (30) qui fait saillie depuis l'extérieur vers un trou de chute (21) au niveau du fond d'une trémie (34) afin de séparer des couvercles (7) empilés pour boîtes de conserve, un par un depuis le bas de l'empilement, et un arbre rotatif (28) qui est supporté depuis une boîte (24) basculante d'engrenages, ladite boîte basculante d'engrenages (24) pouvant être basculée de telle sorte que ledit séparateur soit déplaçable dans la direction radiale par rapport audit trou de chute (21), ladite boîte basculante d'engrenages (24) étant montée de façon réglable dans une fente (35) en arc de cercle pour amener ladite boîte basculante d'engrenages (24) en contact avec la surface de la circonférence extérieure desdits couvercles pour boîtes de conserve dans ledit trou de chute et pour fixer sa position dans ladite fente en arc de cercle, **caractérisé** en ce que un corps cylindrique (22) comprenant ledit trou de chute (21) est placé au niveau du fond de ladite trémie (34), ledit corps cylindrique étant monté de façon interchangeable pour faire correspondre le diamètre du trou de chute avec le diamètre du couvercle correspondant.

2. Alimentateur de couvercles pour boîtes de conserve selon la revendication 1, **caractérisé** en ce que ladite boîte basculante d'engrenages (24) est fixée en position au moyen d'un levier de serrage (36).
